(19) Europäisches Patentamt
European Patent Office
Office européen des brevets

(11) Publication number: **0 154 448**
**A2**

(12) # EUROPEAN PATENT APPLICATION

(21) Application number: 85301135.1

(22) Date of filing: 20.02.85

(51) Int. Cl.⁴: C 22 B 34/14

(30) Priority: 22.02.84 US 582272

(43) Date of publication of application: 11.09.85 Bulletin 85/37

(84) Designated Contracting States: AT BE DE FR GB IT NL SE

(71) Applicant: Iron Ore Company of Canada
100 Retty Street
Sept Iles Quebec, G4R 4L5(CA)

(72) Inventor: Witte, Margaret Kent
3609 Walnut Grove
Mississauga Ontario(CA)

(72) Inventor: Frey, Carla Corinne
211 Roche Court
Mississauga Ontario(CA)

(74) Representative: Spoor, Brian et al,
c/o E.N. LEWIS & TAYLOR 144 New Walk
Leicester, LE1 7JA(GB)

(54) **Process for recovery of zirconium by solvent extraction.**

(57) A process for the recovery of zirconium from an aqueous acid solution by solvent extraction is disclosed. The process includes contacting the aqueous acid solution, which may also contain titanium and other metallic impurities, with an organic solution of a water-insoluble organic solvent and a suitable dialkyl-organophosphinic acid whereby zirconium and hafnium are selectively extracted from the aqueous solution into the organic solution with only minor amounts of coextracted titanium and other metallic impurities. The zirconium and hafnium may be subsequently stripped from the pregnant organic solution by contacting the solution with an aqueous ammonium carbonate solution whereby the zirconium and hafnium are selectively extracted from the organic solution into the aqueous ammonium carbonate solution with only trace amounts of coextracted titanium and other metallic impurities. A high purity zirconium/hafnium oxide may subsequently be precipitated from the pregnant aqueous ammonium carbonate solution by a controlled heating process.

EP 0 154 448 A2

Title: Process For Recovery of Zirconium by Solvent Extraction

This invention relates to the recovery of zirconium from an aqueous acid solution by solvent extraction.

Zirconium commonly occurs in commercial ore bodies in the form of a silicate or a mixture of oxides and silicates. Zirconium ores generally contain varying concentrations of hafnium, titanium, iron, aluminum, columbium, yttrium, uranium and other metallic impurities.

Useful forms of zirconium may be recovered from crushed and concentrated silicate ore after first decomposing the ore in a caustic bake to produce a water-soluble alkali silicate and an impure, insoluble alkali zirconate. Leaching with water or acid may remove substantially all of the silica and the remaining solid, which contains substantially all of the zirconium and metallic impurities, may then be dissolved in sulphuric acid or a similar acid.

The recovery of high purity zirconium for many non-nuclear commercial applications, such as refractory, ceramic, electronic and chemical applications, does not require the separation of associated hafnium from the zirconium due to the similar chemistries and atomic structures of the two elements. However, other impurities present in the sulphuric acid solution such as titanium, iron and aluminum, must be substantially separated.

One method of recovering zirconium and hafnium from sulphuric acid solution involves precipitation and redissolution of the metallic values in nitric acid followed by solvent extraction with an organic extractant such as tributyl phosphate. The sulphuric acid solution must first be treated with ammonia or ammonium hydroxide to precipitate out impure zirconium hydroxide. This hydroxide is subsequently redissolved in nitric acid. The nitric acid solution is then contacted with a solution of organic extractant in a suitable organic solvent. During solvent extraction, the organic solution extracts zirconium and hafnium from the nitric acid solution while most impurities are substantially rejected. Although considerable purification is accomplished, titanium contamination is not avoided during this process. U.S. Patent No. 3,272,590, which issued September 13, 1966 to Pittsburgh Plate Glass Company, teaches a method of reducing the amount of titanium to be coextracted into a tributyl phosphate solution involving the addition of a peroxidizing agent, in particular, hydrogen peroxide, to the extraction system.

Relatively pure zirconium and hafnium values may be stripped from the organic solution into another aqueous solution and then precipitated as salts or hydroxides, which may then be calcined to produce a relatively pure zirconium/hafnium oxide.

It is apparent that this method of recovering zirconium from an aqueous sulphuric acid solution requires a large number of process steps:

hydrolyzation;

redissolution in nitric acid;

solvent extraction;

stripping;

precipitation; and

calcining.

Furthermore, numerous reagents including a hydrolyzing agent, nitric acid, a peroxidizing agent and a precipitating agent, as well as heat energy for calcining, must be used in addition to the organic solution and the stripping solution.

It has now been found that zirconium and hafnium values may be extracted from an aqueous inorganic acid solution with considerably higher selectivity by using an organophosphinic acid solution. It has further been found that zirconium and hafnium may be selectively stripped from a pregnant organophosphinic acid extracting solution by the use of an aqueous ammonium carbonate solution. It has further been found that a zirconium/hafnium oxide of very high purity may be precipitated directly from a pregnant aqueous ammonium carbonate stripping solution by a controlled heating process. It has further been found that a very high purity zirconium/hafnium oxide may be recovered from an

aqueous acid solution also containing a number of impurities, including titanium, by contacting the aqueous acid solution with an organophosphinic acid solution to extract selectively zirconium and hafnium with minimal impurities, and subsequently contacting the pregnant organophosphinic acid extracting solution with an aqueous ammonium carbonate solution to selectively strip zirconium and hafnium with only trace impurities, and subsequently heating the pregnant aqueous ammonium carbonate stripping solution to 70°C to precipitate out a titanium-rich precipitate, and, after separating the titanium-rich precipitate, further heating the solution to 90°C to precipitate out a very high purity zirconium/hafnium oxide. This method eliminates the hydrolyzation, redissolution in nitric acid, and calcining steps and also eliminates the need for a hydrolyzing agent, nitric acid, a peroxidizing agent, a precipitating agent, and calcining heat energy, as required in the prior art method described above.

The use of organophosphoric acids and organic phosphate solvents in solvent extraction of Group IV-B metals is well known. An organic alkyl phosphate has been used to separate zirconium from hafnium in nitric acid solutions in U.S. Patent No. 2,923,607, which issued February 2, 1960 to the United States of America as represented by the United States Atomic Energy Commission. An organophosphoric acid has been used to

separate uranium from zirconium in fluoride solutions in U.S. Patent No. 3,243,257, which issued March 29, 1966 to the United States of America as represented by the United States Atomic Energy Commission. U.S. Patent No. 3,052,514, which issued September 4, 1962, to the United States of America as represented by the United States Atomic Energy Commission, teaches that hexavalent uranium may be recovered from aqueous acid solutions with an unidentified reaction product of phosphorous pentoxide and a high purity dialkylphosphoric, dialkylphosphinic or alkyl alkylphosphonic acid. In addition, although not relating to Group IV-B metals, U.S. Patent No. 4,124,462, which issued November 7, 1978 to MX-Processor Reinhardt & Co. AB, teaches that zinc may be separated from iron in a sulphuric acid solution by extracting with either organophosphoric, organophosphonic or organophosphinic acid; however, an organophosphoric acid is taught to be the preferred extractant.

It has now been found that an organophosphinic acid exhibits an unexpectedly high degree of selectivity toward zirconium and hafnium dissolved in a number of aqueous acid solutions. The organophosphinic acids which have been found to be effective are compounds with the following structure:

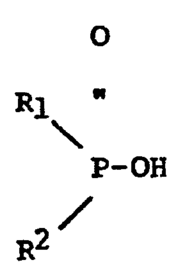

wherein $R_1$ and $R_2$, which may be similar or dissimilar, each represents a straight or branched alkyl radical having a suitable length to make the acid highly immiscible in aqueous solutions but not unmanageably viscous. Organophosphinic acids comprised of alkyl radicals containing from about 6 to 20 carbon atoms generally are of suitable viscosity and aqueous immiscibility. One suitable, commercially available organophosphinic acid is Cyanex®272, which is di-(trimethylpentyl)phosphinic acid.

Organophosphinic acids are related closely to organophosphoric acids of the following structure:

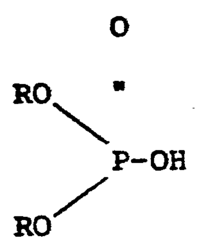

and also to organophosphonic acids of the following structure:

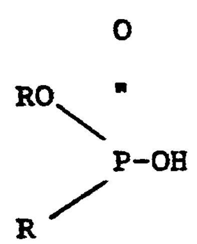

Although these related organic acids will extract zirconium and hafnium from aqueous solutions, they do not demonstrate the unexpectedly high degree of selectivity toward zirconium and hafnium displayed by organophosphinic acids.

In the practice of one embodiment of this invention, an organophosphinic acid extractant is dissolved in a water-immiscible organic solvent, such as an aromatic solvent, an aliphatic solvent, a paraffin or kerosene. Kerosene is a preferred solvent due to its low cost, high immiscibility with water and low density. Ore concentrates or other suitable sources of impure zirconium may be treated and dissolved in acids such as sulphuric, hydrochloric or nitric acid. Sulphuric acid is a preferred acid due to its low cost.

The aqueous acid solution containing zirconium, hafnium and various impurities such as titanium, aluminum and iron, and the organic solution, containing the organophosphinic acid, are preferably contacted in a counter-current liquid-liquid multi-stage extraction system. A vertical extraction tower may be used in which the organic solution is introduced into a lower stage or stages of the column and the aqueous acid solution is fed into an upper stage or stages of the column. Within the vertical extraction column, an upwardly flowing stream of organic solution and a downwardly flowing stream of aqueous acid solution are contacted in counter-current fashion. The pregnant organic solution, containing the zirconium and hafnium and minor amounts of impurities, is withdrawn from the upper stage of the column. The aqueous solution, containing the remaining impurities is withdrawn from the bottom of the column.

The impurities which are rejected effectively are those which hydrolyze at a pH higher than that at which zirconium hydrolyzes. In practice, the pH of the solution may be adjusted to ensure that substantially all of the zirconium and hafnium values will be extracted into the organic solution. It has been found that at a pH of between about 1.0 and about 1.5 this is accomplished. A small percentage of the titanium and a very small percentage of the iron which are present in the aqueous acid solution are also extracted into the organic solution. These impurities are substantially separated in the stripping and precipitation stages described below. All other impurities which hydrolyze at a pH higher than 1.5, including niobium, yttrium, rare earths, aluminum, beryllium, tin and calcium, are substantially rejected by the organic solution and remain in the aqueous acid solution.

Zirconium and hafnium values may be stripped from the pregnant organic solution by contacting it with an aqueous carbonate solution. It has been found that aqueous ammonium carbonate solution is particularly effective in selectively removing zirconium and hafnium values from the organic solution and thereby further separating the minor amounts of coextracted titanium and iron which may be present in the pregnant organic solution. Again, the organic and aqueous solutions are preferably contacted in a counter-current fashion in a

multi-stage extraction system such as a vertical extraction tower.

It has been found that stripping efficiency is maximized when the molar ratio of zirconium ion to ammonium ion in the system is 2:1. This molar ratio may be effectively maintained at approximately 2:1 by adjusting the pH of the system to between about 9.2 and about 9.4 with additions of ammonia or ammonium hydroxide solution during extraction.

A substantially pure zirconium/hafnium hydroxide may be precipitated from the pregnant aqueous ammonium carbonate stripping solution by conventional hydrolyzation. Such a step would involve treatment with a hydrolyzing agent such as ammonium hydroxide. The zirconium/hafnium hydroxide precipitate, which may contain trace impurities, including titanium, may then be calcined to an oxide.

Alternatively, it has been discovered that a controlled heating of the pregnant ammonium carbonate stripping solution may be used to precipitate a zirconium/hafnium compound without requiring the addition of a hydrolyzing agent. In this precipitation process, the aqueous carbonate solution is elevated to a temperature of 90°C. At this temperature, ammonia and carbon dioxide are evolved and the zirconium and hafnium and trace impurities, including titanium, precipitate out of the solution.

Preferably, however, a two-stage controlled heating precipitation process is used to obtain further purification of the zirconium/hafnium product. It has been found that by elevating the temperature of the pregnant ammonium carbonate stripping solution to 70°C, the trace amounts of titanium present in the stripping solution are substantially separated as a titanium-rich precipitate. Substantially all of the zirconium and hafnium remain in solution. The solution may be held at a temperature of 70°C while small amounts of ammonia evolve and the titanium-rich compound continues to precipitate. This precipitate is then separated and the temperature of the solution is further elevated to 90°C. At this temperature, the remaining ammonia plus carbon dioxide are evolved and zirconium and hafnium are precipitated as a high-purity, substantially titanium-free oxide.

The following examples illustrate several embodiments of the process of the present invention.

EXAMPLE 1

Zirconium ore concentrates were treated and dissolved in concentrated sulphuric acid. The sulphuric acid solution contained the following metal values:

| Element | Assay (gpl) |
|---|---|
| Zr | 6.1 |
| Y | 2.1 |
| Fe | 3.2 |
| Al | 1.1 |
| Ti | 1.2 |
| Sn | .06 |
| Nb | .32 |
| Be | .14 |
| Ce | .25 |
| Ca | .80 |

The pH of the aqueous solution was adjusted to 1.3. The free acid level was 30 gpl sulphuric acid.

This solution was contacted with an organic solution consisting of 10% by volume Cyanex® 272 and 90% by volume kerosene in an 8 stage counter-current extraction system. This resulted in the extraction of 99.7% of the zirconium from the aqueous sulphuric acid solution into the organic solution.

The pregnant organic solution was then contacted with a 2N aqueous ammonium carbonate solution in a 5-stage counter-current extraction system in which the volume ratio of aqueous solution to organic solution was 1:2. Substantially all of the zirconium and hafnium were stripped from the organic solution into the ammonium carbonate solution.

The metal values were precipitated from the ammonium carbonate solution by adding ammonium hydroxide. The concentrate had the following assay:

| Assay on % $ZrO_2$ Basis | |
|---|---|
| $Fe_2O_3$ | 0.43 |
| $Al_2O_3$ | 0.28 |
| $TiO_2$ | 1.10 |

EXAMPLE 2

The selective extraction of zirconium by organophosphinic acid from other aqueous acid solutions was also investigated. Three similar samples of a zirconium ore concentrate were treated and separately dissolved in sulphuric, nitric and hydrochloric acids. In each case, 200 kg of acid was used to dissolve one tonne of ore. The three aqueous acidic solutions were each contacted with an organic solution consisting of 10% by volume Cyanex®272 and 90% by volume kerosene in a single stage extraction system at an aqueous to organic volume ratio of 2:1 for a contact time of 2.5 minutes. The following extractions of zirconium were found for each acid solution:

| Acid | % Extraction of Zr |
|---|---|
| $H_2SO_4$ | 85.1 |
| HCl | 83.9 |
| $HNO_3$ | 97.4 |

EXAMPLE 3

An aqueous ammonium carbonate stripping solution as obtained in example 1 was heated to a temperature

of 70°C and held at that temperature. Substantially all of the titanium present in the solution precipitated out as a titanium-rich precipitate, which also contained minor amounts of zirconium and hafnium. After the titanium-rich precipitate had been separated from the solution, the solution was heated to 90°C and held at that temperature. A high purity zirconium/hafnium oxide was then precipitated. It was found that trace titanium contamination was reduced from 1.1% in the ammonium carbonate stripping solution to less than 0.1% in the final zirconium/hafnium oxide precipitate. The assay of the zirconium/hafnium oxide precipitate was as follows:

| | Assay on % $ZrO_2$ Basis |
|---|---|
| $ZrO_2/HfO_2$ | 99.6 |
| $Fe_2O_3$ | .01 |
| $SiO_2$ | .001 |
| $Al_2O_3$ | less than .01 |
| $TiO_2$ | .07 |

CLAIMS:

1. A process for recovering zirconium and hafnium from an aqueous inorganic acid solution which also contains various metallic impurities, which may include titanium, by solvent extraction, in which the aqueous acid solution is contacted with an organic solution of a water-insoluble organic solvent and an organophosphinic acid of the following structure:

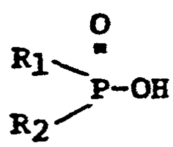

wherein $R_1$ and $R_2$, which may be similar or dissimilar, each represent a straight or branched alkyl radical containing from 6 to 20 carbon atoms, whereby zirconium and hafnium are selectively extracted from the aqueous solution into the organic solution with substantially minor amounts of coextracted titanium and other metallic impurities.

2. The process according to claim 1 characterised in that the organophosphinic acid is di-(trimethylpentyl)phosphinic acid.

3. The process according to claim 1 characterised in that the acqueous acid solution is a sulphuric acid solution.

4. The process according to claim 1 characterised in that the extraction is carried out at a pH of between about 1.0 and about 1.5.

5. The process according to claim 1 characterised in that the water-insoluble organic solvent is kerosene.

6. The process according to claim 1 characterised in that the acqueous acid solution and the organic solution are contacted in a counter-current liquid-liquid multi-stage extraction system.

7. The process according to claim 1 characterised in that the pregnant organic solution, containing extracted zirconium and hafnium, and minor amounts of coextracted titanium and other metallic impurities, is separated from the aqueous acid solution and subsequently stripped by contacting it with an aqueous ammonium carbonate solution whereby the zirconium and hafnium are selectively extracted from the organic solution into the aqueous ammonium carbonate solution with only trace amounts of coextracted titanium and other metallic impurities.

8. The process according to claim 7 characterised in that the pH of thc system is adjusted to between about 9.2 and about 9.4 with additions of ammonia or ammonium hydroxide solution.

9. The process according to claim 7 characterised in that the aqueous ammonium carbonate stripping solution is approximately 2N aqueous ammonium carbonate.

10. The process according to claim 7 characterised in that the pregnant organic solution and the aqueous ammonium carbonate stripping solution are contacted in a liquid-liquid counter-current multi-stage extraction system.

11. The process according to claim 7 characterised in that the pregnant aqueous ammonium carbonate solution, containing extracted zirconium and hafnium, and trace amounts of coextracted titanium and other metallic impurities, is separated from the organic solution and is subsequently heated to 90°C whereby zirconium and hafnium amounts are precipitated with only trace amounts of titanium and other metallic impurities.

12. The process according to claim 7 characterised in that the pregnant aqueous ammonium carbonate solution, containing extracted zirconium and hafnium, and trace amounts of coextracted titanium and other metallic impurities, is separated from the organic solution and is subsequently heated to 70°C whereby the titanium is selectively precipitated as a titanium-rich precipitate, and wherein the aqueous ammonium carbonate solution is then separated from the

titanium-rich precipitate and is heated to 90°C whereby zirconium and hafnium are precipitated as a substantially titanium-free high purity oxide.